# EUROPÄISCHE PATENTSCHRIFT

(11) **EP 0 902 197 B1**
(45) Veröffentlichungstag und Bekanntmachung des Hinweises auf die Patenterteilung: **28.02.2001**
(21) Anmeldenummer: 98117004.6
(22) Anmeldetag: 08.09.1998
(51) Int. Cl.: F16B 5/06

(54) **Halteelement aus Kunststoff für mindestens einen plattenförmigen Gegenstand**
Plastic retaining element for at least one platelike article
Elément de support en matière plastique pour au moins un article en forme de plaque

(30) Priorität: 11.09.1997 DE 19739950
(43) Veröffentlichungstag der Anmeldung: 17.03.1999
(73) Patentinhaber: TRW Automotive Electronics & Components GmbH & Co. KG, 78315 Radolfzell (DE)
(72) Erfinder: Kraus, Willibald, 67289 Grünstadt (DE)
(74) Vertreter: Eder, Thomas, Dr.-Ing.

(56) Entgegenhaltungen:
- EP-A- 0 524 451
- DE-A- 4 002 443
- FR-A- 2 300 928
- FR-A- 2 673 249
- GB-A- 818 548

## Beschreibung

Die Erfindung bezieht sich auf ein Halteelement aus Kunststoff für mindestens einen plattenförmigen Gegenstand, mit einem mindestens teilweise in einen Träger einsetzbaren Grundkörper, welcher einen am Träger anliegenden Flansch und eine sich durch den Flansch und den Grundkörper erstreckende, im unteren Bereich abgeschlossene Ausnehmung aufweist, und mit mindestens einem in die Ausnehmung des Grundkörpers in mindestens einer Gegenrast einsetzbaren Rastelement (EP 0524 451A).

Als Stand der Technik sind bereits derartige Halteelemente bekannt, welche jedoch relativ kompliziert aufgebaut oder lediglich für einen ganz speziellen Anwendungsbereich einsetzbar sind (DE 29 29 461 C2, DE-OS 28 50 123, DE-GM 80 13 134). Insbesondere sind diese bekannten Halteelemente nicht verwendbar, wenn die plattenförmigen Gegenstände beispielsweise als Teppichboden ausgebildet sind. Für einen Teppichboden sind spezielle Erfordernisse zu erfüllen, beispielsweise um in einem Kraftfahrzeuginnenraum einen derartigen Teppichboden, eine Einlegematte, eine Fußmatte o. Ä. sicher und verschiebefest zu haltern, selbst wenn über einen längeren Zeitraum höhere Belastungen und Erschütterungen auftreten.

Entsprechend liegt der vorliegenden Erfindung die Aufgabe zugrunde, ein Halteelement der eingangs genannten Art zu schaffen, welches bei einfachem Aufbau und schneller Montage insbesondere zur Halterung von Teppichböden und/oder Einlegematten auch dann geeignet ist, wenn diese hohen Anforderungen ausgesetzt sind.

Diese Aufgabe wird dadurch gelöst, dass insbesondere zur Halterung mindestens eines als Teppichboden und/oder als Einlegematte ausgebildeten plattenförmigen Gegenstands der Grundkörper den Flansch überragende, federnde Spreizelemente aufweist, welche nach Einsetzen des Rastelements in die Gegenrast der Ausnehmung des Grundkörpers von einem Abschlussflansch des Rastelements überdeckt sind. Durch das Zusammenwirken von Grundkörper und Rast mit Gegenrast und das Eindringen der federnden Spreizelemente in den Außenumfang einer Öffnung des Teppichbodens und/oder der Einlegematte wird eine einwandfreie Halterung geschaffen, wobei der Abschlussflansch diesen Halterungsbereich des plattenförmigen Gegenstands überdeckt und damit vor Beschädigungen und Witterungseinflüssen schützt. Als plattenförmiger Gegenstand kann z.B. mindestens ein Teppichboden oder eine Einlegematte bzw. eine Fußmatte gehaltert werden.

Es können beispielsweise vier über den Umfang verteilte Spreizelemente Anwendung finden, wobei jedes Spreizelement jeweils einen z. B. ein Teppichbodenloch übergreifenden Vorsprung aufweist. Dieser Vorsprung liegt im Abstand oberhalb des Flanschs des Grundkörpers und nimmt zwischen diesem und sich den Teppichboden am Außenumfang des Teppichbodenlochs auf.

Zur besseren Halterung eines Teppichbodens bzw. einer Einlegematte können zwischen den Spreizelementen passend zu dem Teppichbodenloch gewölbte Führungsstege angeordnet sein. Weiterhin kann der Grundkörper ein konisch zulaufendes, in den Träger einsetzbares Basisteil mit der Ausnehmung aufweisen, wobei mindestens zwei diagonal einander gegenüberliegende Gegenrasten innenseitig der Ausnehmung angeordnet sind. Vorzugsweise können vier Gegenrasten Anwendung finden, um das Rastelement einwandfrei in dem Grundkörper zu sichern.

In weiterer Ausgestaltung der Erfindung kann der Flansch rechteckig ausgebildet sein und auf der Oberseite zwischen den Spreizelementen jeweils mindestens einen in die Unterseite des Teppichbodens bzw. einer Einlegematte einlagerbaren Stift aufweisen. Vorzugsweise können jeweils zwei im Abstand voneinander angeordnete Stifte beidseitig der Spreizelemente auf der Oberseite des Flanschs liegen, welche sich nach Durchführung der Montage in den Teppichboden bzw. in die Einlegematte einbohren und diesen einwandfrei in der positionierten Lage sichern.

Erfindungsgemäß besteht die Möglichkeit, dass das Rastelement als Schraubelement und die Gegenrast als Bereich mit mindestens einem Gewindegang ausgebildet ist.

Nach einem anderen Merkmal der Erfindung kann das als Schraubelement ausgebildete Rastelement zwischen dem Abschlussflansch und mehreren, über den Außenumfang verteilten als Gegenrasten ausgebildeten Gewindegängen einen zylindrischen Bereich mit einem der Unterseite des Abschlussflanschs zugekehrten Absatz aufweisen. Hierbei kann der Außenumfang dieses Absatzes auf den Innendurchmesser der Spreizelemente und der Führungsstege des Grundkörpers abgestellt sein. Auch hierdurch erhält der Teppichboden an seiner fixierten Stelle eine einwandfreie rutschsichere Positionierung.

In weiterer Ausgestaltung der Erfindung kann das Schraubelement im Bereich der Gewindegänge eine sich bis in den Bereich des Absatzes erstreckende Ausnehmung aufweisen, woraus sich vorteilhafterweise eine Materialeinsparung ergibt. Darüber hinaus kann der Abschlussflansch gewölbt ausgebildet sein und eine den Teppichboden beaufschlagende umlaufende Dichtlippe besitzen. Mit Hilfe dieser Dichtlippe und des gewölbten Abschlussflanschs wird der Teppichboden an der gelochten Stelle einwandfrei überdeckt und vor Verschmutzung bzw. Feuchtigkeitseinfluss geschützt.

Weiterhin kann der Abschlussflansch oberseitig strukturiert und mit einem Montagesphlitz versehen sein. Mit Hilfe dieses Montageschlitzes, welcher beispielsweise passend für eine Münze gestaltet ist, lässt sich rasch eine Montage bzw. Demontage des Teppichbodens an der betreffenden Stelle durchführen, z. B. mit einem Montagewerkzeug.

Die Ausnehmung kann im unteren Bereich mit mindestens einem Schlitz versehen sein, wobei vorzugsweise mindestens vier über den Umfang der Gewindegänge oder der Rastelemente verteilte Schlitze vorgesehen sein können.

In weiterer Ausgestaltung der Erfindung besteht auch die Möglichkeit, dass der Grundkörper über mindestens ein Halteelement in eine Öffnung eines Trägers einsetzbar ist.

Die Erfindung wird nachfolgend anhand von in der Zeichnung dargestellten Ausführungsbeispielen näher beschrieben. In der Zeichnung zeigen:
- Fig. 1: eine Seitenansicht eines ein Teil des Halteelements bildenden Schraubelements;
- Fig. 2: eine Draufsicht auf das Schraubelement nach Fig. 1;
- Fig. 3: eine Seitenansicht eines einen anderen Teil des Halteelements bildenden Grundkörpers;
- Fig. 4: eine Draufsicht auf den Grundkörper nach Fig. 3;
- Fig. 5: eine Vorderansicht des Grundkörpers nach Fig. 3 und 4;
- Fig. 6: eine perspektivische Sprengansicht des aus Grundkörper und Schraubelement bestehenden Halteelements vor der Montage;
- Fig. 7a,b: jeweils einen Schnitt durch das Halteelement im Bereich eines Teppichbodenlochs in Seitenansicht;
- Fig. 8: eine andere Ausführungsform des Schraubelements und
- Fig. 9: eine andere Ausführungsform des Grundelements in montiertem Zustand.

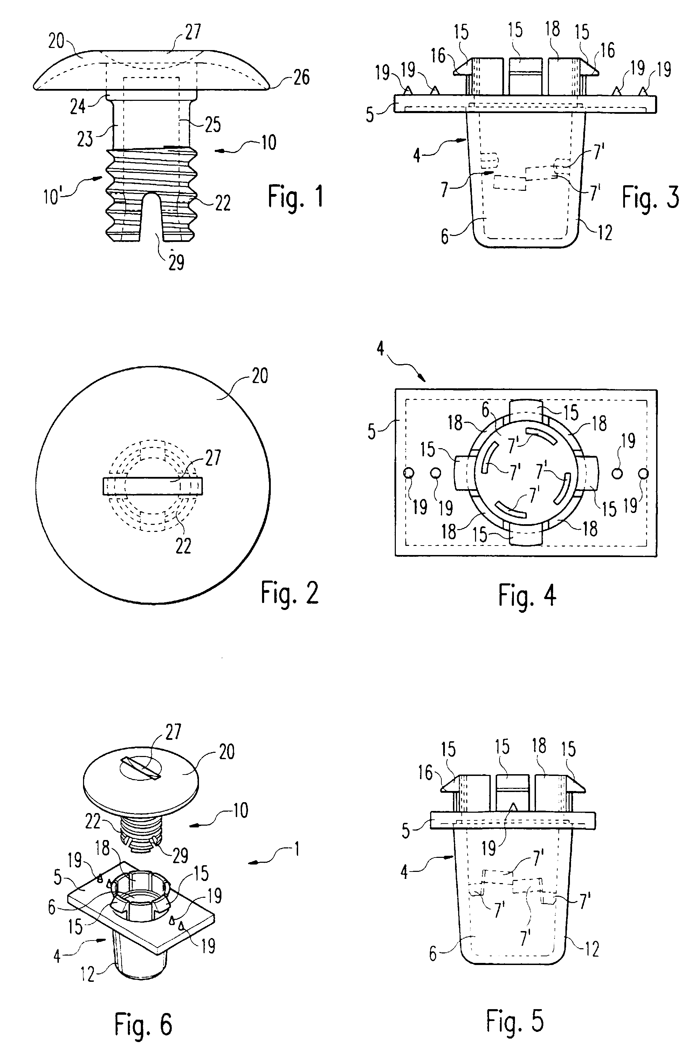

Wie in Fig. 6 in einer perspektivischen Sprengansicht dargestellt, besteht das aus Kunststoff gefertigte erfindungsgemäße Halteelement 1 in der Ausführungsform nach Fig. 1 aus einem Grundkörper 4 mit einem Flansch 5 und einem in eine Ausnehmung 6 des Grundkörpers 4 einsetzbaren Rastelement 10.

Hierbei kann der Grundkörper 4 in eine Öffnung 17, beispielsweise eines Teppichbodens 2, eingeclipst und anschließend z.B. mit PUR-Schaum als Träger 3 hinterspritzt werden.

Fig. 1 und 2 zeigen das Rastelement 10 in Seitenansicht bzw. in Draufsicht: Wie erkennbar, ist das Rastelement 10 als Schraubelement 10' ausgebildet und weist zwischen einem Anschlussflansch 20 und mehreren, über den Außenumfang verteilten Gewindegängen 22 einen zylindrischen Bereich 23 mit einem der Unterseite des Abschlussflanschs 20 zugekehrten Absatz 24 auf. Darüber hinaus besitzt das Schraubelement 10' im Bereich der Gewindegänge 22 eine sich bis in den Bereich des Absatzes 24 erstreckende, nach unten offene Ausnehmung 25.

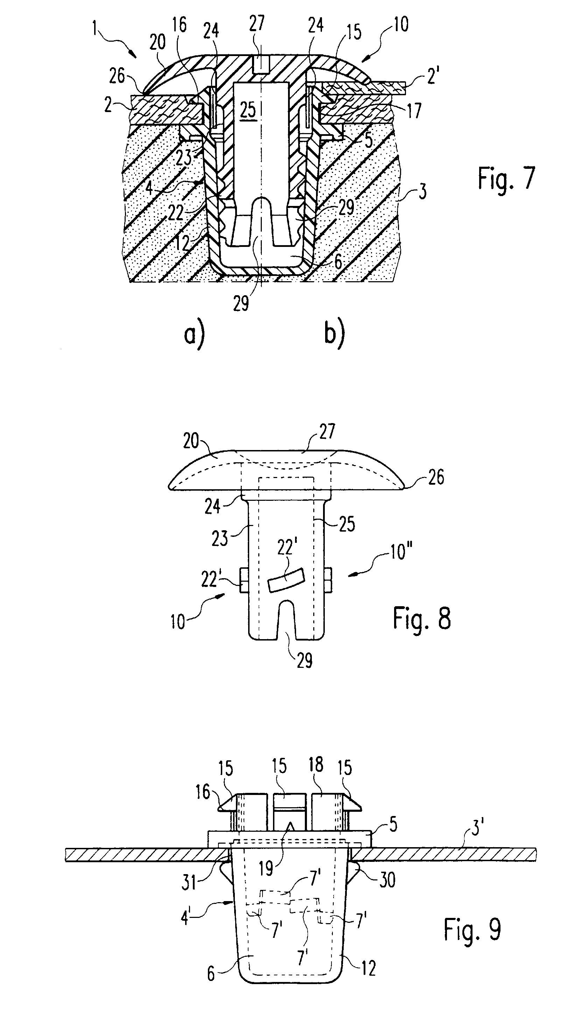

Der Abschlussflansch 20 des Schraubelements 10' ist gewölbt ausgebildet und weist eine den Teppichboden 2 (Fig. 7a) beaufschlagende umlaufende Dichtlippe 26 auf.

Dieser Abschlussflansch 20 ist oberseitig strukturiert und gemäß Fig. 2 und 6 mit einem Montageschlitz 27 versehen, welcher beispielsweise passend zur Aufnahme einer Münze gestaltet ist. Die Dichtlippe 26 liegt etwa in Höhe des Absatzes 24, wie aus Fig. 1 erkennbar. Die Ausnehmung 25 ist im unteren Bereich mit mindestens einem Schlitz 29 versehen, wobei vorzugsweise vier über den Umfang der Gewindegänge 22 verteilte Schlitze 29 Anwendung finden.

Der in den Fig. 3 bis 5 dargestellte Grundkörper 4 besitzt einen Flansch 5 und weist die sich durch den Flansch und ein Basisteil 12 des Grundkörpers 4 erstreckende, im unteren Bereich abgeschlossene Ausnehmung 6 auf. In dieser Ausnehmung 6 befindet sich eine Gegenrast 7, welche z.B. aus vier über den Umfang verteilten Gewindegängen 7' besteht, die zur Aufnahme und Halterung der Außengewindegänge 22 des Schraubelements 10' dienen. Das Basisteil 12 kann konisch zulaufend ausgebildet sein.

Oberseitig des vorzugsweise rechteckig ausgebildeten Flanschs 5 sind federnde Spreizelemente 15 angeordnet, zwischen denen gewölbte Führungsstege 18 vorliegen. Die Spreizelemente 15 sind von den Führungsstegen 18 jeweils über Schlitze voneinander getrennt, wobei die Anordnung so getroffen ist, dass der jeweilige Außenumfang der Führungsstege 18 und der Spreizelemente 15 passend auf den Durchmesser eines Teppichbodenlochs 17 (Fig. 7a) abgestellt ist. Vorzugsweise finden vier über den Umfang verteilte Spreizelemente 15 Anwendung, wobei jedes Spreizelement 15 mit einem den Außenumfang des Teppichbodenlochs 17 übergreifenden Vorsprung 16 versehen ist.

Der Flansch 5 weist an der Oberseite zwischen den Spreizelementen 15 und den Führungsstegen 18 jeweils mindestens einen Stift 19 auf; bei dem dargestellten Ausführungsbeispiel sind nach Fig. 4 und 6 jeweils zwei Stifte beidseitig der Spreizelemente 15 bzw. der Führungsstege 18 auf der Oberseite des Flanschs 5 angeordnet. Diese Stifte 19 sind geeignet, sich in die Unterseite des Teppichbodens 3 einzudrücken.

Aus Fig. 7a geht die montierte Anordnung des Halteelements 1 hervor: Zunächst wird der Grundkörper 4 in das Teppichbodenloch 17 eingeclipst. Anschließend erfolgt das Hinterschäumen des Teppichbodens 2 mit Dämmmaterial als Träger 3.

Der Flansch 5 beaufschlagt die Oberseite des Trägers 3.

Anschließend wird das Schraubelement 10' über die Gewindegänge 22 im Zusammenwirken mit den Gewindegängen 7 in den Grundkörper 4 so lange eingeschraubt bzw. eingedrückt oder eingeschlagen, bis die umlaufende Dichtlippe 26 des Abschlussflanschs 20 des Schraubelements 10 die Oberseite des Teppichbodens 2 beaufschlagt. Alternativ kann das Schraubelement 10' auch in den Grundkörper 4 eingedrückt und über die Gegenrast 7 gesichert werden.

Da der Außenumfang des Absatzes 24 des Schraubelements 10' auf den Innendurchmesser der Spreizelemente 15 und der Führungsstege 18 des Grundkörpers 4 abgestellt ist, können die Spreizelemente 15 nicht mehr federn, übergreifen verschiebesicher das Teppichbodenloch 17 und haltern den Teppichboden 2 damit in seiner Lage.

Der Grundkörper 4 ist so konzipiert, dass nach Auftragen des Dämmmaterials 3 dieses nicht in Sichtweite des Teppichbodens 2 kommt.

Eine zusätzliche Sicherung wird dadurch erzielt, dass sich in der montierten Position die Stifte 19 in die Unterseite des Teppichbodens 2 eindrücken und diesen damit verschiebesicher haltern. Der Flansch 5 kann nach Fig. 7a an der Unterseite mit einer umlaufenden Ausnehmung versehen sein, um die Anlage auf der Oberseite des Trägers 3 funktionssicherer zu gestalten.

Nach Fig. 7b besteht auch die Möglichkeit, auf dem mit dem Dämmmaterial 3 verbundenen Teppichboden 2 durch das erfindungsgemäße Halteelement 1 einen zweiten Teppichboden 2' funktionssicher zu haltern.

Der Flansch 5 muss keine Rechteckform aufweisen, er kann beispielsweise auch rund oder mehreckig ausgebildet sein, wobei jeweils über den Umfang des Flanschs verteilte Stifte 19 eingesetzt werden können, um nach durchgeführter Montage in die Unterseite des Teppichbodens 2 eingedrückt zu werden.

Da die Gewindegänge 22 des Schraubelements 10' durch Schlitze 29 (Fig. 1, Fig. 6, Fig. 7) unterbrochen sind, gestaltet sich das Einschrauben bzw. Einschlagen des Schraubelements 10' in die Gewindegänge 7 der Ausnehmung 6 des Grundkörpers 4 sehr einfach, so dass die Montage rasch und funktionssicher durchzuführen ist.

Zur Demontage wird ein Werkzeug in den Montageschlitz 27 eingesetzt und das Schraubelement 10' herausgeschraubt.

Fig. 8 zeigt eine andere Ausführungsmöglichkeit des Rastelements 10, welches als Schraubelement 10'' mit einzelnen, über den Umfang verteilten Teilgewindegängen 22' ausgebildet ist. Diese können mit den Gewindegängen 7' des Grundkörpers 4 zusammenwirken.

In Fig. 9 ist eine Modifikation des Grundkörpers 4 als Grundkörper 4' dargestellt: Hier sind z.B. mehrere Halteelemente 30 am Außenumfang angeordnet, welche eine Öffnung 31 eines Trägers 3' (z.B. aus Kunststoff oder Metall) hintergreifen. Der Träger 3' kann beliebig ausgestaltet, z.B. ein Karosserieteil eines Kraftfahrzeuges, sein.

Insgesamt ergibt sich eine sehr gute Halterung mindestens eines Teppichbodens 2 bzw. 2' oder mindestens einer Einlegematte auf einem Träger 3 bzw. 3' mit Hilfe des erfindungsgemäßen Halteelements 1, welche aus dem speziell gestalteten Rastelement 10 und dem entsprechend geformten Grundkörper 4 bzw. 4' besteht.

## Patentansprüche

1. Halteelement aus Kunststoff für mindestens einen plattenförmigen Gegenstand (2) ,
mit einem zumindest teilweise in einem Träger (3; 3') einsetzbaren Grundkörper (4; 4'), welcher einen am Träger (3; 3') anlegbaren Flansch (5) und eine sich durch den Flansch (5) und den Grundkörper (4; 4') erstreckende, im unteren Bereich abgeschlossene Ausnehmung (6) aufweist, und
mit mindestens einem in die Ausnehmung (6) des Grundkörpers (4; 4') in mindestens eine Gegenrast (7) einsetzbaren Rastelement (10),
**dadurch gekennzeichnet**,
dass insbesondere zur Halterung mindestens eines als Teppichboden und/oder als Einlegematte ausgebildeten plattenförmigen Gegenstands (2, 2') der Grundkörper (4; 4') den Flansch (5) überragende, federnde Spreizelemente (15) aufweist, welche nach Einsetzen des Rastelements (10) in die Gegenrast (7) der Ausnehmung (6) des Grundkörpers (4; 4') von einem Abschlussflansch (20) des Rastelements (10) überdeckt sind.

2. Halteelement nach Anspruch 1,
**gekennzeichnet durch**
vier über den Umfang verteilte Spreizelemente (15).

3. Halteelement nach Anspruch 1 oder 2,
**dadurch gekennzeichnet**,
dass jedes Spreizelement (15) einen ein Teppichbodenloch (17) übergreifenden Vorsprung (16) aufweist.

4. Halteelement nach Anspruch 1 bis 3,
**dadurch gekennzeichnet**,
dass zwischen den Spreizelementen (15) passend zu dem Teppichbodenloch (17) gewölbte Führungsstege (18) angeordnet sind.

5. Halteelement nach einem oder mehreren der vorhergehenden Ansprüche,
**dadurch gekennzeichnet**,
dass der Grundkörper (4; 4') ein konisch zulaufendes, in den Träger (3,3') einsetzbares Basisteil (12) mit der Ausnehmung (6) aufweist, wobei mindestens zwei diagonal einander gegenüberliegende Gegenrasten (7) innenseitig der Ausnehmung (6) angeordnet sind.

6. Halteelement nach einem oder mehreren der vorhergehenden Ansprüche,
**dadurch gekennzeichnet**,
dass der Flansch (5) rechteckig ausgebildet ist und auf der Oberseite zwischen den Spreizelementen (15) jeweils mindestens einen in die Unterseite des Teppichbodens (2, 2') einlagerbaren Stift (19) aufweist.

7. Halteelement nach Anspruch 6,
**gekennzeichnet durch**
jeweils zwei im Abstand voneinander angeordnete Stifte (19) auf der Oberseite des Flanschs (5) beiderseits der Spreizelemente (15).

8. Halteelement nach Anspruch 1,
**dadurch gekennzeichnet**,
dass das Rastelement (10) als Schraubelement (10'; 10'') und die Gegenrast (7) als Bereich mit mindestens einem Gewindegang (7') ausgebildet sind.

9. Halteelement nach Anspruch 8,
**dadurch gekennzeichnet,**
dass das Schraubelement (10'; 10'') zwischen dem Abschlussflansch (20) und mehreren über den Außenumfang verteilten Gewindegängen (22) einen zylindrischen Bereich (23) mit einem der Unterseite des Abschlussflanschs (20) zugekehrten Absatz (24) aufweist.

10. Halteelement nach Anspruch 9,
**dadurch gekennzeichnet**,
dass der Außenumfang des Absatzes (24) auf den Innendurchmesser der Spreizelemente (15) und der Führungsstege (18) des Grundkörpers (4; 4') abgestellt ist.

11. Halteelement nach Anspruch 9 und 10,
**dadurch gekennzeichnet**,
dass das Schraubelement (10'; 10'') im Bereich der Gewindegänge (22) eine sich bis in den Bereich des Absatzes (24) erstreckende Ausnehmung (25) aufweist.

12. Halteelement nach Anspruch 1 sowie 9 bis 11,
**dadurch gekennzeichnet**,
dass der Abschlussflansch (20) gewölbt ausgebildet ist und eine den Teppichboden (2, 2') beaufschlagende umlaufende Dichtlippe (26) aufweist.

13. Halteelement nach Anspruch 12,
**dadurch gekennzeichnet**,
dass der Abschlussflansch (20) oberseitig strukturiert und mit einem Montageschlitz (27) versehen ist.

14. Halteelement nach Anspruch 9 und 12,
**dadurch gekennzeichnet,**
dass die Dichtlippe (26) etwa in der Höhe des Absatzes (24) liegt.

15. Halteelement nach Anspruch 11,
**dadurch gekennzeichnet,**
dass die Ausnehmung (25) im unteren Bereich mit mindestens einem Schlitz (29) versehen ist.

16. Halteelement nach Anspruch 1 oder 15,
**gekennzeichnet durch**
vier über den Umfang des Rastelements (10) oder der Gewindegänge (22) verteilte Schlitze.

17. Halteelement nach einem oder mehreren der vorhergehenden Ansprüche,
**dadurch gekennzeichnet**,
dass der Grundkörper (4') über mindestens ein Halteelement (30) in eine Öffnung (31) eines Trägers (3') einsetzbar ist.

## Claims

1. Retaining element made of plastic for at least one sheet-like article (2), having a basic body (4; 4') which can be inserted at least partially in a carrier (3; 3') and has a flange (5), which can be positioned on the carrier (3; 3'), and a recess (6) which extends through the flange (5) and the basic body (4; 4') and is terminated in the bottom region, and having at least one latching element (10) which can be inserted into at least one mating catch (7) in the recess (6) of the basic body (4; 4'), characterized in that, in particular for securing at least one sheet-like article (2, 2') designed as a carpet and/or as a mat, the basic body (4; 4') has resilient spreader elements (15) which project beyond the flange (5) and, once the latching element (10) has been inserted into the mating catch (7) of the recess (6) of the basic body (4; 4'), is covered over by a termination flange (20) of the latching element (10).

2. Retaining element according to Claim 1, characterized by four spreader elements (15) distributed over the circumference.

3. Retaining element according to Claim 1 or 2, characterized in that each spreader element (15) has a protrusion (16) engaging over a carpet hole (17).

4. Retaining element according to Claims 1 to 3, characterized in that guide webs (18) which are curved in accordance with the carpet hole (17) are arranged between the spreader elements (15).

5. Retaining element according to one or more of the preceding claims, characterized in that the basic body (4; 4') has a conically tapering base part (12) which can be inserted into the carrier (3, 3') and contains the recess (6), at least two diagonally opposite mating catches (7) being arranged inside the recess (6).

6. Retaining element according to one or more of the preceding claims, characterized in that the flange (5) is of rectangular design and has on the top side, between the spreader elements (15), in each case at least one pin (19) which can be embedded in the underside of the carpet (2, 2').

7. Retaining element according to Claim 6, characterized by in each case two spaced-apart pins (19) on the top side of the flange (5) on both sides of the spreader elements (15).

8. Retaining element according to Claim 1, characterized in that the latching element (10) is designed as a screw-action element (10'; 10'') and the mating catch (7) is designed as a region of at least one thread turn (7').

9. Retaining element according to Claim 8, characterized in that, between the termination flange (20) and a plurality of thread turns (22) distributed over the outer circumference, the screw-action element (10'; 10'') has a cylindrical region (23) with a shoulder (24) directed towards the underside of the termination flange (20).

10. Retaining element according to Claim 9, characterized in that the outer circumference of the shoulder (24) is designed in accordance with the internal diameter of the spreader elements (15) and of the guide webs (18) of the basic body (4; 4').

11. Retaining element according to Claims 9 and 10, characterized in that, in the region of the thread turns (22), the screw-action element (10'; 10'') has a recess (25) extending into the region of the shoulder (24).

12. Retaining element according to Claims 1 and 9 to 11, characterized in that the termination flange (20) is of curved design and has an encircling sealing lip (26) which acts on the carpet (2, 2').

13. Retaining element according to Claim 12, characterized in that the termination flange (20) has a structured top side and is provided with an installation slot (27).

14. Retaining element according to Claims 9 and 12, characterized in that the sealing lip (26) is located approximately level with the shoulder (24).

15. Retaining element according to Claim 11, characterized in that the recess (25) is provided with at least one slot (29) in the bottom region.

16. Retaining element according to Claim 1 or 15, characterized by four slots distributed over the circumference of the latching element (10) or of the thread turns (22).

17. Retaining element according to one or more of the preceding claims, characterized in that the basic body (4') can be inserted into an opening (31) of a carrier (3') via at least one retaining element (30).

## Revendications

1. Elément de support ou de retenue en plastique pour au moins un article (2) en forme de plaque,
avec un corps de base (4;4') pouvant être mis en place au moins partiellement dans un support (3;3'), corps de base présentant une bride (5) pouvant être fixée sur le support (3:3') et un évidement (6) s'étendant à travers la bride (5) et le corps de base (4;4'), fermé dans la zone inférieure,
et
avec au moins un élément d'arrêt (10) pouvant être mis en place dans l'évidement (6) du corps de base (4;4') dans au moins un contre-arrêt (7),
caractérisé en ce que,
en particulier pour la retenue ou support d'un article (2;2') en forme de plaque conçu comme une moquette et/ou tapis de sol à intercaler, le corps de base (4;4') présente des éléments d'écartement élastiques (15) dépassant en hauteur la bride (5), éléments d'écartement qui, après la mise en place de l'élément d'arrêt (10) dans le contre - arrêt (7) de l'évidement (6) du corps de base (4;4') sont recouverts d'une bride de fermeture ou fausse bride (20).

2. Elément de support ou de retenue selon la revendication 1,
caractérisé par
quatre éléments d'écartement (15) répartis sur la périphérie.

3. Elément de support ou de retenue selon la revendication 1 ou 2,
caractérisé en ce que,
chaque élément d'écartement (15) présente une saillie (16) emprisonnant un trou (17) de moquette par le dessus.

4. Elément de support ou de retenue selon la revendication 1 à 3,
caractérisé en ce que,
des entretoisea de guidage courbées (18) sont disposées de façon adaptée au trou (17) de moquette.

5. Elément de support ou de retenue selon une ou plusieurs des revendications précédentes,
caractérisé en ce que,
le corps de base (4;4') présente une partie de base (12) de forme conique, pouvant être mis en place dans le support (3,3') avec l'évidement (6), au moins deux contre - arrêts (7) diagonalement en regard l'un de l'autre étant disposés à l'intérieur de l'évidement (6).

6. Elément de support ou de retenue selon une ou plusieurs
des revendications précédentes,
caractérisé en ce que,
la bride (5) est de conception rectangulaire et présente sur le côté supérieur entre les éléments d'écartement (15) respectivement au moins une pointe (19) pouvant se loger dans le côté inférieure de la moquette (2,2').

7. Elément de support ou de retenue selon la revendication 6,
caractérisé par
respectivement deux pointes (19) disposées selon un espacement entre elles sur le côté supérieur de la bride (5) des deux côtés des éléments d'écartement (15).

8. Elément de support ou de retenue selon la revendication 1,
caractérisé on ce que,
l'élément d'arrêt (10) est formé en tant qu'élément de vis (10';10") et le contre-arrêt (7) comme zone avec au moins un pas de filetage (7').

9. Elément de support ou de retenue selon la revendication 8,
caractérisé en ce que,
l'élément de vis (10';10") présente entre la fausse bride (20) et plusieurs pas de filetage (22) réparties sur la périphérie extérieure une zone cylindrique (23) avec un appendice (24) détourné par rapport au côté inférieure de la fausse brida (20),

10. , Elément de support ou de retenue selon la revendication 9,
caractérisé en ce que,
la périphérie extérieure de l'appendice (24) est adaptée au diamètre intérieur de l'élément d'écartement (15) et de l'entretoise de guidage (18) du corps de base (4;4').

11. Elément de support ou de retenue 9 et 10,
caractérisé en ce que,
l'élément de vis (10';10'') au niveau des filetages (22) présente un évidement (25) s'étendant dans la zone de l'appendice (24).

12. Elément de support ou de retenue selon la revendication 1 ainsi que 9 à 11,
caractérisé en ce que,
la fausse bride ou bride de fermeture (20) est de conception arquée et présente une lèvre d'étanchéité (26) entourant le plancher de tapis (2,2').

13. Elément de support ou de retenue selon la revendication 12,
caractérisé en ce que,
le bride de fermeture (20) est structurée sur la partie supérieure et est munie d'une fente de montage (27,

14. Elément de support ou de retenue 9 et 12,
caractérisé en ce que,
la lèvre d'étanchéité (26) se situe sensiblement à hauteur de l'appendice (24).

15. Elément de support ou do retenue selon la revendication 11,
caractérisé en ce que,
l'évidement (25) est muni d'au moins une fente (29) dans la zone inférieure.

16. Elément de support ou de retenue selon la revendication 1 ou 15,
caractérisé par
quatre fentes réparties sur la périphérie de l'élément (10) ou les pas de filetage.

17. Elément de support ou de retenue selon une ou plusieurs des revendications précédentes,
caractérisé en ce que,
le corps de base (4') peut être mis en place mur au moins un élément de support (30) dans une ouverture (31) d'un support (3').
